Europäisches Patentamt

European Patent Office

Office européen des brevets

(19)

(11) Veröffentlichungsnummer : **0 413 143 B1**

(12) # EUROPÄISCHE PATENTSCHRIFT

(45) Veröffentlichungstag der Patentschrift :
**29.12.93 Patentblatt 93/52**

(51) Int. Cl.$^5$ : **B26B 21/06**

(21) Anmeldenummer : **90113460.1**

(22) Anmeldetag : **13.07.90**

(54) **Rasierapparatekopf, insbesondere Rasierklingeneinheit eines Nassrasierapparates.**

(30) Priorität : **16.08.89 DE 3926899**

(43) Veröffentlichungstag der Anmeldung :
**20.02.91 Patentblatt 91/08**

(45) Bekanntmachung des Hinweises auf die
Patenterteilung :
**29.12.93 Patentblatt 93/52**

(84) Benannte Vertragsstaaten :
**AT BE CH DE DK ES FR GB GR IT LI LU NL SE**

(56) Entgegenhaltungen :
**DE-A- 2 447 087**
**DE-A- 2 750 796**
**GB-A- 1 587 317**
**GB-A- 2 166 997**

(73) Patentinhaber : **Wilkinson Sword Gesellschaft
mit beschränkter Haftung
Schützenstrasse 110
D-42659 Solingen (DE)**

(72) Erfinder : **Althaus, Wolfgang
Hülsberg 94
D-5600 Wuppertal 1 (DE)**
Erfinder : **Coffin, Dave
47, Silver Street
Norwich, Norfolk (GB)**

(74) Vertreter : **Stenger, Watzke & Ring
Patentanwälte
Kaiser-Friedrich-Ring 70
D-40547 Düsseldorf (DE)**

## Beschreibung

Die Erfindung betrifft einen am vorderen Ende eines Handgriffs angeordneten Rasierapparatekopf, insbesondere Rasierklingeneinheit eines Naßrasierapparates, mit einem, an einer Vorderkante eine vordere Führungsleiste sowie eine Klingenplattform aufweisenden Kunststoffgehäuse sowie mit einem Klingenblock, bei dem an einem Abstandhalter eine Einfach- oder Doppelrasierklinge unlösbar befestigt ist, wobei der Klingenblock im wesentlichen von der Vorderkante gesehen von oben in das Kunststoffgehäuse auf die Klingenplattform einsetzbar und nach dem Einsetzen im Kunststoffgehäuse fixierbar ist.

Bei Einwegnaßrasierapparaten ist eine Einfach- oder Doppelrasierklinge unlösbar im Rasierapparatekopf in einem Kunststoffgehäuse eingebettet. Ist der Rasierapparatekopf separat ausgebildet und kann an einem Handgriff befestigt werden, wobei zu diesem Zweck der Handgriff sowie der Rasierapparatekopf miteinander korrespondierende Verriegelungseinrichtungen aufweisen, spricht man von einer sogenannten Rasierklingeneinheit.

Ein Rasierapparatekopf in Form einer Rasierklingeneinheit der eingangs angegebenen Art ist aus der GB-PS 2 087 287 bekannt. Die Rasierklingeneinheit besitzt dabei ein einstückiges Kunststoffgehäuse, in dem entweder eine Einfach- oder eine Doppelrasierklinge unlösbar befestigt ist und dabei auf einer Klingenplattform des Kunststoffgehäuses aufliegt. Bei der Verwendung einer Doppelrasierklinge ist zwischen den beiden Rasierklingen ein Abstandhalter angeordnet, wobei die beiden Rasierklingen lediglich an den Abstandhalter angelegt und mit diesem nicht fest verbunden sind. Dies hat den Nachteil, daß während des Rasiervorganges die Rasierklingen flattern und somit die Rasiereigenschaften des Rasierapparates beeinträchtigen. Zur Befestigung der beidseitig am Abstandhalter anliegenden Rasierklingen innerhalb des Kunststoffgehäuses weist dieses nach vorne sich erstreckende, angeformte Finger auf, die zugleich eine Abdeckung bilden und zusammen mit der vorderen Führungsleiste der Rasierklingeneinheit die Rasiergeometrie definieren. Zur Befestigung wird das Paket aus den Rasierklingen sowie dem Abstandhalter von vorne zwischen die Klingenplattform und die oberen Finger geschoben, wobei letztere von oben auf die Rasierklingen sowie den Abstandhalter drücken und diese somit innerhalb des Kunststoffgehäuses fixieren. Zusätzlich sind in den Seitenwänden des Kunststoffgehäuses Vorsprünge vorgesehen, in die beim Hineinschieben seitliche Ausnehmungen des Abstandhalters einrasten. Die Einfachrasierklinge wird entsprechend der Doppelrasierklinge innerhalb des Kunststoffgehäuses befestigt, indem wiederum die Rasierklinge zwischen den oberen Fingern und der unteren Klingenplattform festgeklemmt wird.

Bei dieser bekannten Rasierklingeneinheit ist die Befestigung der Rasierklinge(n) innerhalb des Kunststoffgehäuses kompliziert und aufwendig. Zum einen können bei der Verwendung von Doppelrasierklingen diese sehr leicht auf dem Abstandhalter verrutschen. Zum anderen fordert das Einschieben des Paketes bestehend aus den Rasierklingen und dem dazwischen angeordneten Abstandhalter viel Geschick. Darüber hinaus besteht beim Einschieben sehr leicht die Gefahr, daß die Schneidkanten der Rasierklingen beschädigt werden.

In der GB-A-2 166 997 ist ein am vorderen Ende eines Handgriffs angeordneter Rasierapparatekopf eines Naßrasierapparates offenbart. Der Rasierapparatekopf weist dabei ein Kunststoffgehäuse mit einer vorderen Führungsleiste sowie mit einer Klingenplattform auf. Für die Rasierklinge in Form einer Einfach- oder Doppelrasierklinge ist als separates Bauteil ein Klingenblock vorgesehen, bei dem an einem Abstandhalter die Einfach- oder Doppelrasierklinge beispielsweise durch Vernieten unlösbar befestigt ist. Dieser Klingenblock wird im wesentlichen von oben in das Kunststoffgehäuse auf dessen Klingenplattform eingesetzt und anschließend durch Aufstecken einer Abdeckkappe zwischen dieser und der Klingenplattform des Kunststoffgehäuses unlösbar fixiert.

Nachteilig bei diesem bekannten Rasierapparatekopf ist die konstruktive Ausbildung des Klingenblocks sowie dessen Anordnung innerhalb des Kunststoffgehäuses. Da der Abstandhalter für die Rasierklingen eben ausgebildet ist, ist er wenig stabil und kann sich sehr leicht verbiegen. Eine gekrümmte Rasierklinge führt aber nicht zu einem optimalen Rasierergebnis und zu einem optimalen Rasierkomfort. Darüber hinaus sind zur Fixierung des Klingenblocks innerhalb des Kunststoffgehäuses sowohl im Abstandhalter als auch in den Rasierklingen Durchbrechungen vorzusehen, welche auf entsprechende Zapfen auf der Klingenplattform des Kunststoffgehäuses aufgesteckt werden. Dies bedeutet nicht nur eine Schwächung der Rasierklingen, sondern es ist auch keine optimale Fixierung des Klingenblocks innerhalb des Kunststoffgehäuses möglich, da es an der erforderlichen Stabilität manglet.

Bei einem in der GB-A 1 587 317 offenbarten Rasierapparatekopf eines Naßrasierapparates weist ein Kunststoffgehäuse eine vordere Führungsleiste sowie eine Klingenplattform auf. Die Rasierklingen in Form einer Doppelrasierklinge sind in einem Klingenblock angeordnet. Dieser besteht aus einem im wesentlichen W-förmig gefalteten Abstandhalter, zwischen dessen Schenkel die beiden Rasierklingen festgeklemmt sind und wobei der oberste Schenkel eine Abdeckkappe definiert. Zum Fixieren des so ausgebildeten Klingenblocks

2

im Kunststoffgehäuse wird dieser von oben auf die Klingenplattform aufgesetzt und die seitlich überstehenden Fortsätze des Abstandhalters derart nach unten umgebogen, daß sie das Kunststoffgehäuse seitlich umgreifen. Auch hier ist der Klingenblock im wesentlichen eben ausgebildet und daher insbesondere im Hinblick auf das Durchbiegen wenig stabil. Darüber hinaus gewährleistet das Umbiegen der seitlichen Fortsätze des Abstandhalters keine sehr sichere Befestigung des Klingenblocks im Kunststoffgehäuse, da sehr leicht Positionsveränderungen während der Rasur eintreten können. Dies wirkt sich aber nachteilig auf das Rasierergebnis und den Rasierkomfort aus.

Aus der DE-A1-24 47 087 ist ein Rasierapparatekopf in Form einer sogenannten Rasierklingeneinheit eines Naßrasierapparates bekannt. Die Rasierklingeneinheit besteht dabei zunächst aus einem Kunststoffgehäuse mit einer vorderen Führungsleiste sowie einer Klingenplattform. Ein Klingenblock, bei dem an einem Abstandhalter zwei Rasierklingen unlösbar unter Spannung befestigt sind, wird von oben auf die Klingenplattform des Kunststoffgehäuses aufgesetzt. Die Fixierung erfolgt mittels einer Abdeckkappe, welche unterseitig sowohl durch den Klingenblock als auch durch das Kunststoffgehäuse durchgehende Stifte zum Vernieten aufweist. Auch hier ist die Stabilität des Klingenblocks nur gering.

Schließlich offenbart die DE-A1-27 50 796 ebenfalls einen Rasierapparatekopf in Form einer Rasierklingeneinheit für einen Naßrasierapparat. Dabei ist ein Kunststoffgehäuse mit einer vorderen Führungsleiste sowie mit einer durch abgestufte Stege gebildeten Klingenplattform vorgesehen. Ein Klingenblock weist entsprechend den Stegen abgestufte Leisten auf, auf denen schmale Rasierklingen entweder durch Festlöten oder Festklemmen unlösbar befestigt sind. Der so gebildete Klingenblock wird schräg von oben auf die Klingenplattform des Kunststoffgehäuses aufgesetzt und in diesem festgeklemmt. Auch hier ist die Stabilität des Klingenblockes nicht ausreichend.

Davon ausgehend liegt der Erfindung die **Aufgabe** zugrunde, den bekannten Rasierapparatekopf eines Naßrasierapparates derart weiterzuentwickeln, daß die konstruktive Ausbildung des Klingenblocks sowie dessen Anordnung im Kunststoffgehäuse verbessert ist.

Als technische **Lösung** wird mit der Erfindung vorgeschlagen, daß für den Klingenblock eine Leiste mit einem im wesentlichen L-förmigen Querschnittsprofil vorgesehen ist, deren eine Schenkel den Abstandhalter definiert und deren andere Schenkel von einem dazu korrespondierenden Längsschlitz im Unterteil des Kunststoffgehäuses aufgenommen ist.

Ein nach dieser technischen Lehre ausgebildeter Rasierapparatekopf eines Naßrasierapparates hat den Vorteil, daß zum einen die konstruktive Ausbildung des Klingenblocks sowie zum anderen die Anordnung dieses Klingenblocks innerhalb des Kunststoffgehäuses verbessert ist. Aufgrund des L-förmigen Querschnittsprofils für die den Abstandhalter definierende Leiste ist ein äußerst stabiler Klingenblock zum einen für die Vormontage und zum anderen für die Anordnung innerhalb des Kunststoffgehäuses geschaffen. Aufgrund des L-Profils ist der Abstandhalter und somit die am Abstandhalter angeordneten Rasierklingen immer eben, obwohl der Abstandhalter Durchbrüche für eine bessere Reinigung des Rasierapparatekopfes besitzen kann. Da der Klingenblock mit dem senkrechten Schenkel des L-Profils in einem dazu korrespondierenden Längsschlitz im Unterteil des Kunststoffgehäuses aufgenommen ist, ist auf diese Weise eine sehr sichere Fixierung innerhalb des Kunststoffgehäuses gewährleistet, ohne daß der Klingenblock und damit der Abstandhalter mit den Rasierklingen Durchbrüche und Ausstanzungen zur Fixierung besitzen müssen. Ein weiterer Vorteil des abgewinkelten Abstandhalters liegt darin, daß dadurch Rasierklingen mit schmalen Schneiden eingesetzt werden können.

Vorteilhafte Weiterbildungen ergeben sich aus den Unteransprüchen.

In einer bevorzugten Befestigung der Rasierklinge(n) am Abstandhalter ist (sind) diese auf dem Abstandhalter aufgeschweißt oder aufgeklebt. Vorzugsweise wird dieses Aufschweißen oder Aufkleben über die gesamte Kontaktfläche zwischen der (den) Rasierklinge(n) auf dem Abstandhalter durchgeführt. Dadurch wird eine optimale großflächige Verbindung hergestellt. Beim Aufschweißen besteht der Abstandhalter aus Metall, während beim Aufkleben dieser auch aus Kunststoff hergestellt sein kann.

Vorzugsweise stehen die beiden Schenkel der L-förmigen Leiste senkrecht zueinander.

In einer bevorzugten Weiterbildung der Leiste ist diese durch kurze Leistenstücke gebildet, welche durch Stege im Bereich derjenigen Schenkel starr miteinander verbunden sind, die vom Längsschlitz im Unterteil des Kunststoffgehäuses aufgenommen sind, und daß in senkrechter Richtung zu der (den) Schneidkante(n) der Rasierklinge(n) fluchtend mit den zwischen den Leistenstücken freigelassenen Öffnungen die Rückseite des Kunststoffgehäuses korrespondierend offen ist. Die kurzen Leistenstücke sind dabei einstückig mit den dazwischen befindlichen Stegen ausgebildet, so daß man insgesamt eine einstückige und durch die Abwinklung stabile Leiste erhält, wobei der eine Schenkel dieser Leiste den Abstandhalter für die Rasierklingen bei einer Doppelrasierklinge bildet, wobei die beiden Rasierklingen beidseits des Abstandhalters angeordnet sind, so daß dieser zwischen den beiden Rasierklingen festgelegt ist. Da somit zwischen den beiden Rasierklingen durch die Zwischenräume zwischen den Leistenstücken bedingte Öffnungen freigelassen sind, wird während

3

der Rasur ein Stau des Rasierschaumes innerhalb des Kunststoffgehäuses vermieden, da dieser besser durchströmen und nach hinten abfließen kann. Darüber hinaus wird dadurch die Reinigung des Rasierapparatekopfes verbessert und vereinfacht. Trotz der Öffnungen in der Leiste ist diese aufgrund ihrer abgewinkelten Form ausreichend stabil. Darüber hinaus entsteht trotz der abgewinkelten Form des Abstandhalters kein größerer Materialverbrauch als bei einem herkömmlichen ungewinkelten Abstandhalter.

In einer weiteren Weiterbildung sind oberhalb der Stege im Bereich derjenigen Schenkel, die durch die Stege miteinander verbunden sind, Öffnungen freigelassen. Dadurch erhöht sich der Durchtrittsquerschnitt, indem bei einer Doppelrasierklinge sowohl zwischen den Rasierklingen als auch unterhalb der unteren Rasierklinge die Leiste Öffnungen aufweist.

Vorzugsweise sind die Leistenstücke im wesentlichen im mittleren Bereich der Schenkel miteinander verbunden, wobei das Unterteil des Kunststoffgehäuses Aussparungen zur Aufnahme der freien Enden der durch die Stege miteinander verbundenen Schenkel aufweist. Dadurch wird einerseits ein optimaler Durchstörmquerschnitt erreicht, andererseits läßt sich der Klingenblock auf einfache und sichere Weise innerhalb des Unterteils des Kunststoffgehäuses lagern, wobei diese Aussparungen den Längsschlitz zur Aufnahme des einen Schenkels des Klingenblockes definieren.

In einer Weiterbildung der Klingenplattform ist diese durch senkrecht zu der (den) Schneidkante(n) der Rasierklinge(n) sich erstreckende Auflagestege gebildet. Diese Auflagestege liegen dabei vorzugsweise vor den kurzen Leistenstücken der Leiste des Klingenblockes. Auf diese Weise wird nur wenig Material für das Unterteil des Kunststoffgehäuses benötigt, da der Klingenblock nicht durchgehend über seine gesamte Länge durch die Klingenplattform abgestützt wird.

Um den Durchströmquerschnitt weiterhin zu vergrößern und darüber hinaus die Reinigungsmöglichkeit des Rasierapparatekopfes zu verbessern, weist das Unterteil des Kunststoffgehäuses in einer Weiterbildung zwischen den Auflagestegen Durchbrechungen auf.

Um das Strömungsverhalten innerhalb des Kunststoffgehäuses dabei weiter zu optimieren, ist die Führungsleiste ausgehend von deren Oberseite rückseitig nach hinten hin abgeschrägt.

Um im Bereich der Schneidkante(n) der Rasierklinge(n) schwer zu reinigende Spalte zu vermeiden sowie ein besseres Abfließen des Rasierschaumes zu ermöglichen, weisen die Auflagestege im Bereich hinter der Führungsleiste oberseitig Aussparungen auf.

In einer bevorzugten Weiterbildung der Führungsleiste ist diese einstückig mit dem Unterteil des Kunststoffgehäuses ausgebildet.

In einer ersten konstruktiven Ausbildung zur Fixierung des Klingenblocks innerhalb des Kunststoffgehäuses wird vorgeschlagen, daß der Klingenblock in ein die Klingenplattform aufweisendes Unterteil des Kunststoffgehäuses auf die Klingenplattform einsetzbar ist und daß auf das Unterteil des Kunststoffgehäuses unter Zwischenanordnung und Fixierung des Klingenblockes eine eine Abdeckkappe definierende Fixierleiste aufsetzbar und mit dem Unterteil des Kunststoffgehäuses unlösbar verbindbar ist. Der Rasierapparatekopf besteht somit aus drei einfachen Teilen, nämlich aus dem Unterteil, einem Oberteil in Form der Fixierleiste sowie aus dem Klingenblock. Diese drei Teile sind einfach zu montieren, indem zunächst der Klingenblock von oben auf das Unterteil aufgesteckt wird. Anschließend erfolgt die endgültige Fixierung des Klingenblocks durch Aufsetzen der oberen Fixierleiste, indem diese unlösbar mit dem Unterteil des Kunststoffgehäuses verbunden wird. Dies läßt sich alles schnell und problemlos durchführen, wobei vor allem eine exakte Positionierung des Klingenblockes und damit der Rasierklingen innerhalb des Kunststoffgehäuses gewährleistet ist.

In einer Weiterbildung der oberen Fixierleiste weist diese seitliche Flügel auf, mittels denen die Fixierleiste auf einer Seitenwand des Unterteils des Kunststoffgehäuses befestigt ist. Dadurch wird eine sehr stabile Verbindung zwischen der oberen Fixierleiste und dem Unterteil des Kunststoffgehäuses geschaffen. Die Verbindung in diesem seitlichen Bereich des Kunststoffgehäuses läßt sich auch auf technisch einfache Weise bewerkstelligen.

Darüber hinaus kann in einer Weiterbildung die Fixierleiste eine rückseitige Wand aufweisen, mittels der die Fixierleiste auf einer Rückwand des Unterteils des Kunststoffgehäuses befestigt ist. Auch wird eine technisch einfach herstellbare Verbindung zwischen der oberen Fixierleiste und dem Unterteil des Kunststoffgehäuses geschaffen.

Zum Verbinden des Unterteils des Kunststoffgehäuses mit der Fixierleiste können diese beiden Teile miteinander verklebt, verschweißt, insbesondere ultraschallverschweißt, oder ineinandergesteckt sein. Zum Ineinanderstecken der beiden Teile können diese miteinander korrespondierende Zapfen und Ausnehmungen aufweisen, die beim Ineinanderstecken im Reibschluß miteinander stehen.

Um die Rasiereigenschaften des Rasierapparatekopfes weiter zu verbessern, ist die die Abdeckkappe definierende Fixierleiste vorzugsweise mit einer reibungsmindernden Beschichtung, insbesondere aus Fotolack oder einem Polymer beschichtet.

Vorzugsweise weist die Fixierleiste eine Rückwand auf, die zu den in der Leiste ausgebildeten Öffnungen

EP 0 413 143 B1

fluchtende Durchbrechungen aufweist. Dadurch ist der Klingenblock sowohl oberseitig als auch rückseitig von der oberen Fixierleiste umschlossen, ohne daß das Durchströmen dadurch behindert wird.

In einer alternativen Ausführungsform zum Fixieren des Klingen blocks im Kunststoffgehäuse wird vorgeschlagen, daß das Kunststoffgehäuse nach dem Einsetzen des Klingenblocks derart plastisch verformbar ist, daß zwischen dem verformten Bereich und der Klingenplattform der Klingenblock festgelegt ist. Bei dieser Ausführungsform besteht der Rasierapparatekopf lediglich aus zwei Teilen, nämlich dem Kunststoffgehäuse und dem Klingenblock. Nach dem Einsetzen des Klingenblocks in das Kunststoffgehäuse erfolgt die endgültige Fixierung des Klingenblocks durch eine geeignete plastische Verformung des Kunststoffgehäuses, so daß der Klingenblock auf sichere Weise in seiner Position festgelegt ist. Eine derartige Fixierung in Form einer plastischen Verformung läßt sich auf technisch einfache Weise durchführen.

Um den Aufwand für die plastische Verformung des Kunststoffgehäuses sehr niedrig zu halten, ist in einer Weiterbildung das Kunststoffgehäuse kaltverformbar.

Eine Weiterbildung des Klingenblocks schlägt vor, daß der Abstandhalter über die Enden der Rasierklinge(n) übersteht und der Klingenblock im Bereich dieser freien Enden des Abstandhalters festgelegt ist. Dies bringt den Vorteil mit sich, daß die Befestigung des Klingenblocks außerhalb des Wirkungsbereiches der Schneidkanten der Rasierklingen erfolgen kann, so daß dadurch die Rasiereigenschaften des Rasierapparatekopfes nicht beeinträchtigt werden.

In einer bevorzugten Ausführungsform ist in den beiden Seitenwänden des Kunststoffgehäuses jeweils eine nach oben hin offene Ausnehmung vorgesehen, in die die Enden des Klingenblocks von oben einsetzbar sind und im Bereich dieser Ausnehmungen sind die Seitenwände über die Enden des Klingenblocks zu deren Festlegung innerhalb des Kunststoffgehäuses nach innen hin umgebogen. Dies stellt eine technisch sehr einfache Möglichkeit dar, um den Klingenblock innerhalb des Kunststoffgehäuses zu fixieren, wobei die Festlegung der Enden des Klingenblocks innerhalb der Ausnehmungen eine große Positioniergenauigkeit gewährleistet.

Vorzugweise sind bei dieser bevorzugten Ausführungsform die Ausnehmungen trichterförmig ausgebildet. Zusätzlich kann noch an der Rückseite der Ausnehmungen jeweils eine in Einsetzrichtung sich erstreckende sowie die Ausnehmungen in Einsetzrichtung verjüngende Rippe angeformt sein. Dies hat den Vorteil, daß beim Einsetzen des Klingenblocks in die Ausnehmungen dieser nach vorne gedrückt wird, so daß der Klingenblock vollständig an der Vorderseite der Ausnehmungen anliegt, wobei die vorgegebene Rasiergeometrie optimal erreicht wird, ohne daß sich beim Herstellungsprozeß des Rasierapparatekopfes Abweichungen ergeben.

Weiterhin wird mit der Erfindung vorgeschlagen, daß an der hinteren Längsseite des Kunststoffgehäuses eine im wesentlichen senkrecht nach oben sich erstreckende Leiste angeformt ist. Diese Leiste übernimmt die Funktion der Abdeckkappen bei den bekannten Rasierapparateköpfen und definiert zusammen mit der vorderen Führungsleiste sowie den Rasierklingen die Rasiergeometrie.

In einer alternativen Ausführungsform zur Festlegung des Klingenblocks innerhalb des Kunststoffgehäuses wird schließlich vorgeschlagen, daß an der hinteren Längsseite des Kunststoffgehäuses eine im wesentlichen senkrecht nach oben sich erstreckende Leiste angeformt ist, die zur Festlegung des Klingenblocks innerhalb des Kunststoffgehäuses entweder über die gesamte Länge oder in Teilbereichen nach vorne umgebogen ist. Auch bei dieser Befestigungsart sind vorzugsweise in den beiden Seitenwänden des Kunststoffgehäuses jeweils eine nach oben hin offene Ausnehmung vorgesehen, in die die Enden des Klingenblocks vor dem Nachvornebiegen der hinteren Leiste von oben einsetzbar sind. Auf diese Weise ist der Klingenblock innerhalb des Kunststoffgehäuses sehr sicher lagefixiert. Die endgültige Fixierung erfolgt dann durch das Nachvornebiegen der hinteren Leiste, wobei dies über die gesamte Länge dieser Leiste erfolgen kann.

Alternativ ist es aber auch möglich, diese hintere Leiste nur in Teilbereichen nach vorne umzubiegen. Insbesondere wenn die hintere Leiste über ihre gesamte Länge nach vorne umgebogen ist, übernimmt diese die Funktion der Abdeckkappen bei den bekannten Rasierapparateköpfen und definiert zusammen mit der vorderen Führungsleiste sowie mit den Rasierklingen die Rasiergeometrie.

Zwei Ausführungsbeispiele eines erfindungsgemäßen Rasierapparatekopfes in Form einer Rasierklingeneinheit wird nachfolgend anhand der Zeichnungen beschrieben. In diesen zeigt:

Fig. 1     eine Draufsicht auf eine erste Ausführungsform einer Rasierklingeneinheit;
Fig. 2     eine Unteransicht der Rasierklingeneinheit;
Fig. 3     eine Vorderansicht der Rasierklingeneinheit;
Fig. 4     eine Rückansicht der Rasierklingeneinheit;
Fig. 5     eine Seitenansicht der Rasierklingeneinheit;
Fig. 6     einen Schnitt entlang der Linie VI-VI in Fig. 1;
Fig. 7     eine Draufsicht auf das Unterteil des Kunststoffgehäuses der Rasierklingeneinheit;
Fig. 8     eine Vorderansicht des Oberteils des Kunststoffgehäuses der Rasierklingeneinheit in Form ei-

5

Fig. 9    eine Vorderansicht des Klingenblocks;
Fig. 10    eine perspektivische Ansicht einer zweiten Ausführungsform einer Rasierklingeneinheit;
Fig. 11    eine entsprechende Darstellung der Rasierklingeneinheit wie in Fig. 10, jedoch vor der plastischen Verformung der Seitenwände des Kunststoffgehäuses zum Fixieren des Klingenblocks.
Fig. 12    eine Draufsicht auf die Rasierklingeneinheit in Fig. 11, jedoch vor dem Einsetzen des Klingen blocks;
Fig. 13    einen Schnitt entlang der Linie XIII-XIII in Fig. 12;
Fig. 14    einen vergrößerten Detailausschnitt aus Fig. 12 im Bereich der linken Seitenwand der Rasierklingeneinheit, jedoch mit eingesetztem Klingenblock;
Fig. 15    einen Schnitt entlang der Linie XV-XV in Fig. 14, jedoch mit nach innen umgebogener Seitenwand;
Fig. 16    einen Schnitt entlang der Linie XVI-XVI in Fig. 14;
Fig. 17    einen Schnitt ähnlich dem in Fig. 16, jedoch mit einer alternativen Befestigungsart zum Festlegen des Klingenblocks innerhalb des Kunststoffgehäuses.

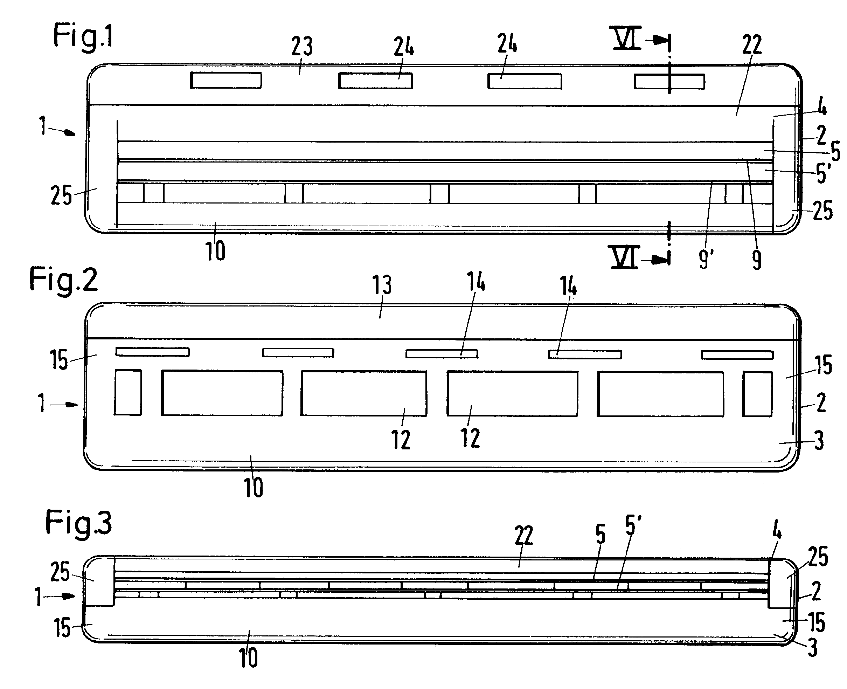

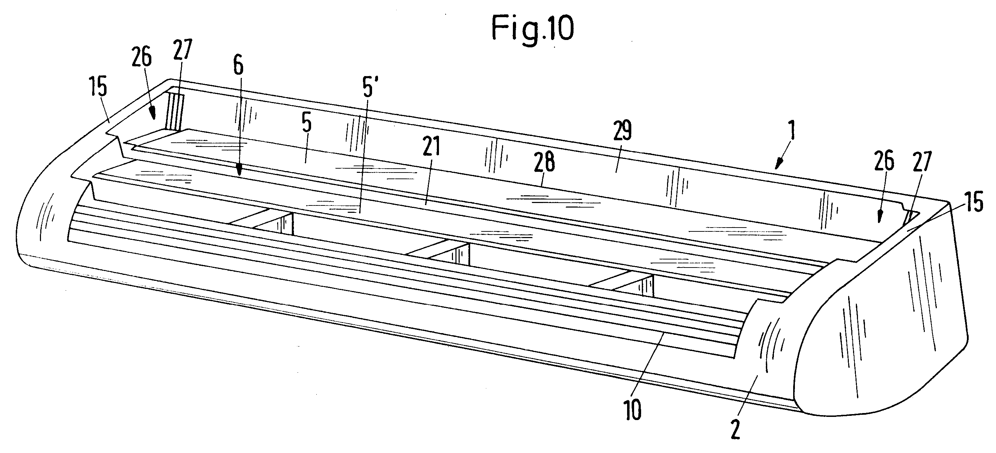

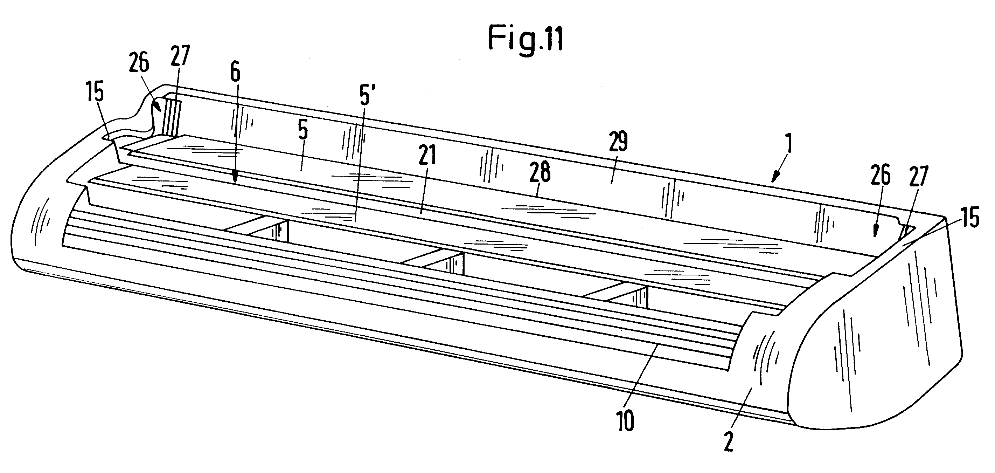

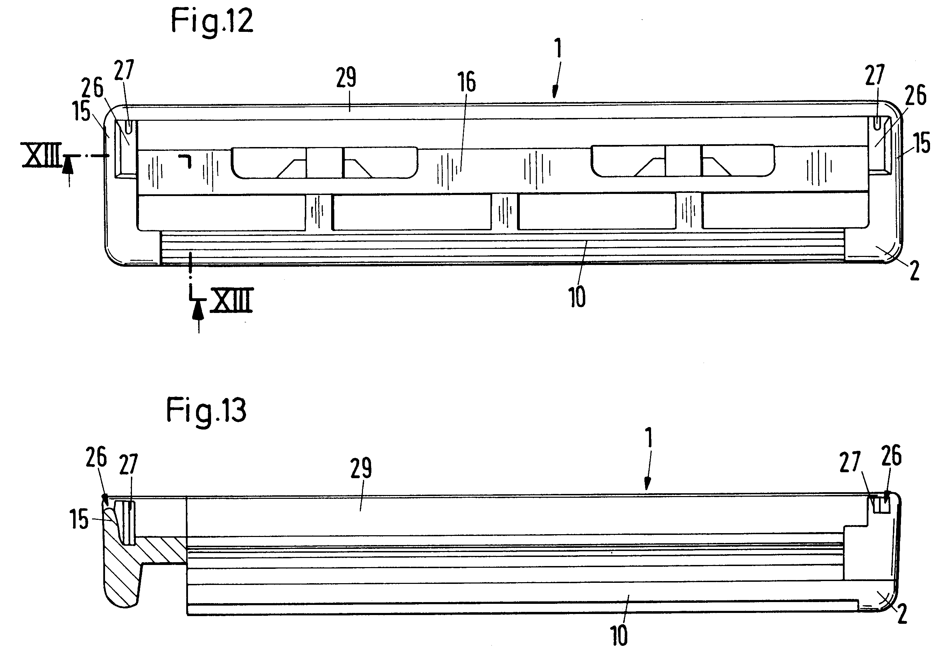

In den Fig. 1 bis 9 ist eine erste Ausführungsform und in den Fig. 10 bis 17 eine zweite Ausführungsform einer Rasierklingeneinheit dargestellt.

Bei der ersten Ausführungsform besteht die Rasierklingeneinheit 1 aus einem Kunststoffgehäuse 2. Dieses ist zusammengesetzt aus einem Unterteil 3 sowie aus einer oberen Fixierleiste 4, die miteinander unlösbar verbunden sind und zwischen sich einen Rasierklingen 5,5' tragenden Klingenblock 6 unverrückbar festlegen. Die Fixierleiste 4 kann dabei mit dem Unterteil 3 verklebt, verschweißt, insbesondere ultraschallverschweißt oder durch Zapfen/Bohrungen über Reibschluß miteinander verbunden sein.

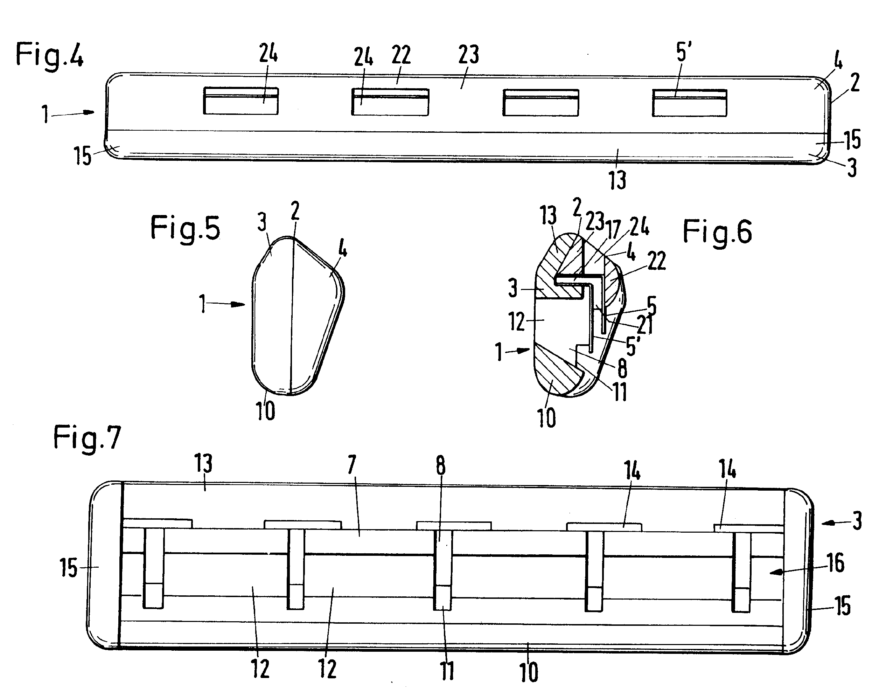

Das Unterteil 3 des Kunststoffgehäuses 2 weist zunächst einen zentralen sowie in Längsrichtung sich erstreckenden Mittelsteg 7 auf. An diesem sind mit Abstand über die Länge verteilt Auflagestege 8 angeformt, welche sich senkrecht zur Längserstreckung der Schneidkanten 9,9' der beiden Rasierklingen 5,5' erstrecken. Am vorderen, freien Ende tragen diese Auflagestege 8 eine Führungsleiste 10, welches mit ihrer Vorderfläche abgerundet ist. Dabei weisen die Auflagestege 8 im Bereich hinter der Führungsleiste 10 jeweils Aussparungen 11 auf. In den Bereichen zwischen einander benachbarten Auflagestegen 8 sowie zwischen dem Mittelsteg 7 und der Führungsleiste 10 sind jeweils Durchbrechungen 12 definiert, wie insbesondere in der Draufsicht gemäß Fig. 7 zu erkennen ist. Auch die Unteransicht in Fig. 2 der gesamten Rasierklingeneinheit 1 läßt dies erkennen.

Parallel zum Mittelsteg 7 weist dieser auf der zur Führungsleiste 10 gegenüberliegenden Seite eine dazu parallele Rückwand 13 auf. Diese ist zum Mittelsteg 7 hin nach unten abgeschrägt. Im Bereich zwischen dem Mittelsteg 7 und der Rückwand 13 sind dabei Aussparungen in Form von Längsschlitzen 14 ausgebildet, die der Aufnahme des Klingenblocks 6 dienen, wie nachfolgend noch beschrieben werden wird. Schließlich weist das Unterteil 3 des Kunststoffgehäuses 2 noch Seitenwände 15 auf.

Die Auflagestege 8 des Unterteils 3 des Kunststoffgehäuses 2 bilden eine Klingenplattform 16 zur Auflage des Klingenblocks 6. Dieser besteht aus einer Leiste 17, welche ein im wesentlichen L-förmiges Querschnittsprofil aufweist. Die Leiste 17 besteht aus einzelnen, kurzen Leistenstücken 17'. Diese sind durch Stege 18 miteinander verbunden, und zwar im Bereich des einen Schenkels 19 der Leiste 17 bzw. der Schenkel 19' der Leistenstücke 17'. Die Stege 18 sind dabei einstückig mit den Leistenstücken 17' ausgebildet und sitzen im wesentlichen im mittleren Bereich der Schenkel 19' der Leistenstücke 17', so daß oberhalb der Stege 18 jeweils eine Öffnung 20 freigelassen ist, während die Schenkel 19' ein freies Ende aufweisen.

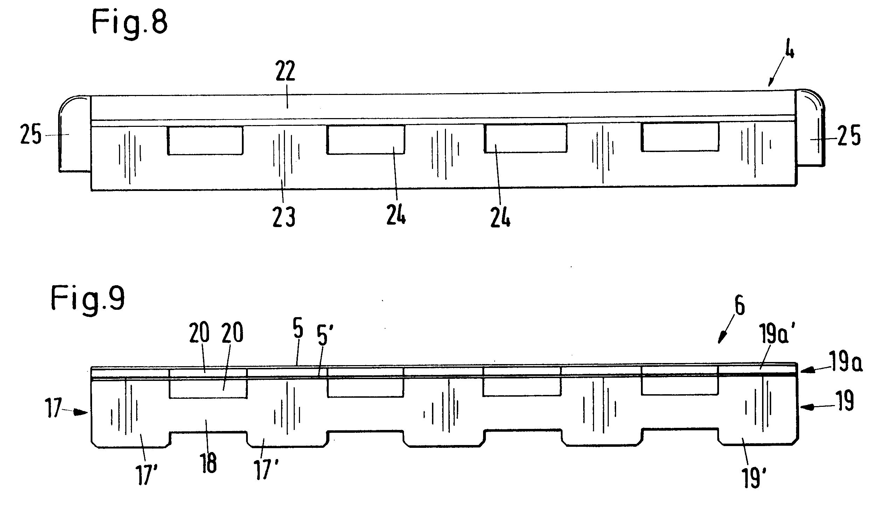

Der andere Schenkel 19a der Leiste 17 bzw. die Schenkel 19a' der Leistenstücke 17' dienen der Aufnahme und Befestigung der beiden Rasierklingen 5,5'. Die obere Rasierklinge 5 ist dabei auf der einen Seite des Schenkels 19a und die untere Rasierklinge 5' an der gegenüberliegenden Seite des Schenkels 19a befestigt, so daß dieser die Funktion eines Abstandhalters 21 erfüllt. Die beiden Rasierklingen 5, 5' sind dabei parallel zueinander ausgerichtet, während die Schneidkanten 9,9' versetzt zueinander sind. Wie in der Vorderansicht gemäß Fig. 9 des Klingenblocks 6 sowie in der Vorderansicht gemäß Fig. 3 der kompletten Rasierklingeneinheit 1 erkennbar ist, sind zwischen den Schenkein 19a' Öffnungen 20 freigelassen.

Zur Montage der Rasierklingeneinheit wird der so ausgebildete Klingenblock 6 von oben auf das Unterteil 3 derart gesetzt, daß die Unterseite der unteren Rasierklinge 5' auf der durch die Auflagestege 8 definierten Klingenplattform 16 zu liegen kommt. Weiterhin kommen die freien Enden der Schenkel 19' der Leistenstücke 17' in den dazu korrespondierenden Längsschlitzen 14 im Unterteil 3 zur Aufnahme. Der Klingenblock 6 ist somit fest auf bzw. im Unterteil 3 des Kunststoffgehäuses 2 festgelegt.

Zur Fixierung des Klingenblocks 6 dient die Fixierleiste 4. Diese definiert eine auf der Oberseite der oberen Rasierklinge 5 aufliegende Abdeckkappe 22. An dieser ist eine rückseitige Wand 23 angeformt. Diese weist Durchbrechungen 24 auf, die mit den in der Leiste 17 ausgebildeten Öffnungen 20 fluchten. Seitlich weist die Fixierleiste 4 dann noch angeformte Flügel 25 auf.

Zur Bildung der vollständigen Rasierklingeneinheit 1 wird die Fixierleiste 4 auf das Unterteil 3 von oben aufgesteckt. Dabei kommt die rückseitige Wand 23 der Fixierleiste 4 auf der Rückwand 13 des Unterteils 3 sowie die Unterseite der Flügel 25 der Fixierleiste 4 auf den Seitenwänden 15 des Unterteils 5 plan zu liegen. Die unlösbare Verbindung zwischen der Fixierleiste 4 und dem Unterteil 3 kann dann durch Verkleben, Verschweißen, insbesondere Ultraschallverschweißen oder durch Reibschluß erfolgen.

Die durch die Fixierleiste 4 definierte Abdeckkappe 22 kann zusätzlich noch mit einer reibungsmindernden Beschichtung beispielsweise aus Fotolack oder aus einem Polymer versehen sein.

Die abgewinkelte Leiste 17 für den Abstandhalter 21 mit den Öffnungen 20 für Durchströmkanäle erlaubt die Herstellung einer Klinge mit schmalen Schneiden. Die Öffnungen 20 zusammen mit den Durchbrechungen 24 in der Fixierleiste sowie die Durchbrechungen 12 im Unterteil 3 gewährleisten eine bessere Durchströmung sowie eine verbesserte sowie einfachere Reinigung. Die Form der Leiste 17 ist dabei derart gewählt, daß insgesamt kein größerer Materialverbrauch als bei ungewinkelten Abstandhaltern entsteht. Dies wird im wesentlichen dadurch erreicht, daß die Leiste 17 die Form ineinanderliegender Rechen hat. Der besondere Vorteil dieser Ausführung liegt darin, daß trotz der Öffnungen 20 zwischen den Rasierklingen 5,5' die Leiste 17 und somit der Abstandhalter 21 aufgrund der gewinkelten Form eine stabile Einheit mit den Rasierklingen 5,5' bildet. Zusätzlich ist bei der erfindungsgemäßen Rasierklingeneinheit die zusätzliche Klingenabdeckung in Form einer Abdeckkappe 22 von Vorteil, die durch die Fixierleiste 4 gebildet wird.

Bei der zweiten Ausführungsform besteht die Rasierklingeneinheit 1 aus einem Kunststoffgehäuse 2. Dieses weist eine vordere Führungsleiste 10, zwei Seitenwände 15, an der hinteren zu der Führungsleiste 10 parallelen Längsseite 28 eine senkrecht nach oben sich erstreckende Leiste 29 sowie im Inneren eine Klingenplattform 16 auf. Alle diese Teile sind einstückig miteinander ausgebildet und bilden somit ein Kunststofformteil. An der Unterseite des Kunststoffgehäuses 2 weist dieses zusätzlich noch einen Verriegelungsmechanismus 30 auf, mittels dem ein nicht dargestellter Handgriff zur Bildung des fertigen Rasierapparates befestigt werden kann.

Innerhalb des Kunststoffgehäuses 2 sind zwei Rasierklingen 5,5' unlösbar befestigt. Zu diesem Zweck sind die beiden Rasierklingen 5,5' an einem flachen, länglichen, quaderförmigen Abstandhalter 21 derart unlösbar befestigt, daß der Abstandhalter 21 sandwichartig zwischen den beiden Rasierklingen 5,5' festgelegt ist. Die Rasierklinge 5,5' sowie der Abstandhalter 21 bilden somit einen sogenannten Klingenblock 6. Dabei sind die Rasierklingen 5,5' auf dem Abstandhalter 21, wenn dieser aus Metall besteht, aufgeschweißt, und zwar vorzugsweise im Bereich der gesamten Kontaktfläche. Statt dessen können die Rasierklingen 5,5' auch aufgeklebt sein, so daß der Abstandhalter 21 auch aus Kunststoff bestehen kann. Der Abstandhalter 21 ist etwas länger als die beiden Rasierklingen 5,5', so daß der Abstandhalter 21 etwas über die Enden der Rasierklingen 5,5' übersteht. Diese überstehenden, freien Enden des Abstandhalters 21 dienen zum Fixieren des Klingenblocks 6 innerhalb des Kunststoffgehäuses 2. Um den Klingenblock 6 innerhalb des Kunststoffgehäuses 2 befestigen zu können, ist dieses im Bereich der Seitenwände 15 jeweils mit einer Ausnehmung 26 versehen, die sich in Einsteckrichtung verjüngt. Zusätzlich ist an der Rückseite jeder Ausnehmung 26 jeweils eine sich in Einsteckrichtung erstreckende Rippe 27 angeformt.

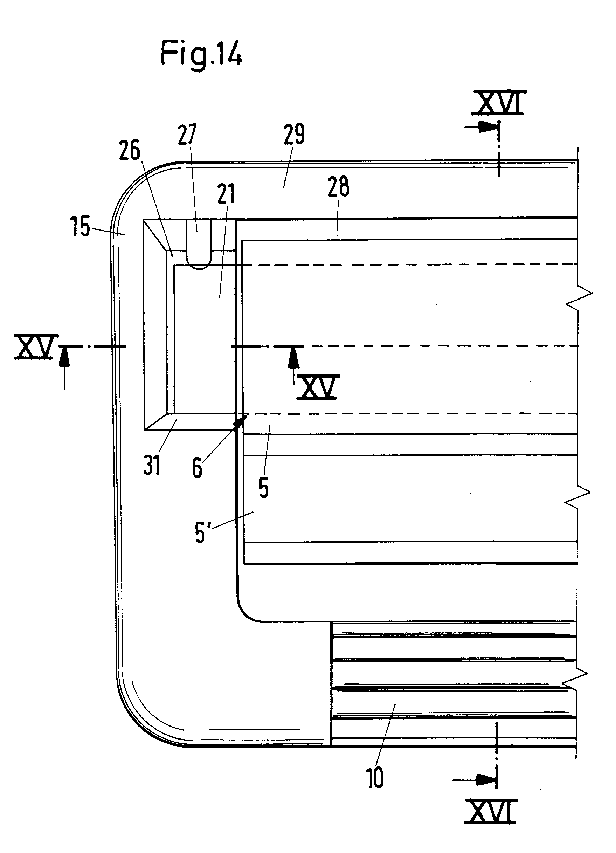

Zum Befestigen des Klingenblocks 6 innerhalb des Kunststoffgehäuses 2 wird dieser zunächst von oben derart in das Kunststoffgehäuse 2 eingesetzt, daß die freien, überstehenden Enden des Abstandhalters 21 innerhalb der beiden Ausnehmungen 26 in den Seitenwänden 15 zu liegen kommen. Dabei drücken die Rippen 27 innerhalb der Ausnehmungen 26 den Abstandhalter 21 nach vorne, so daß dieser an der Vorderseite 31 der Ausnehmung 26 zur Anlage kommt, wie dies in Fig. 14 zu erkennen ist. Auf diese Weise ist die Rasiergeometrie reproduzierbar erreicht, wobei diese durch die Führungsleiste 10 sowie die Schneidkanten der Rasierklingen 5,5' und schließlich durch die Oberkante der Leiste 29 definiert ist.

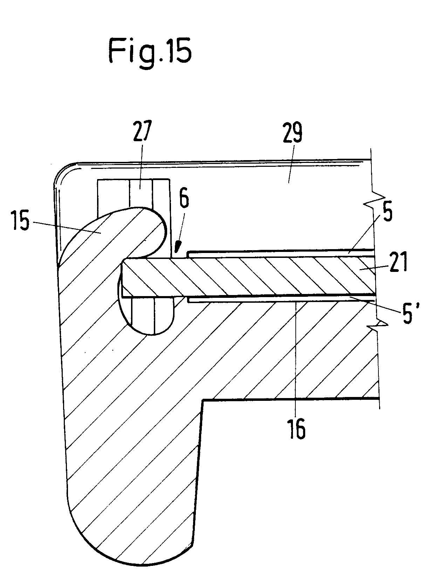

Nach dem Einsetzen des Klingenblocks 6 in das Kunststoffgehäuse 2, wobei in dieser Position der Klingenblock 6 auf der Klingenplattform 16 aufliegt, wird die endgültige Fixierung durchgeführt, indem die Seitenwände 15 des Kunststoffgehäuses 2 im Bereich der Ausnehmungen 26 nach innen mittels einer Kaltverformung plastisch umgebogen werden, so daß der verformte Bereich der Seitenwand 15 auf dem freien Ende des Abstandhalters 21 zu liegen kommt und dazwischen der Klingenblock 6 festgelegt ist. Dies ist in Fig. 15 zu erkennen.

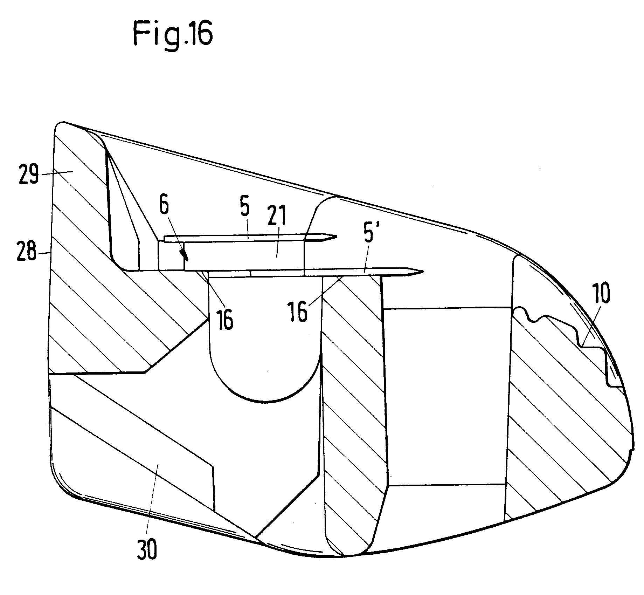

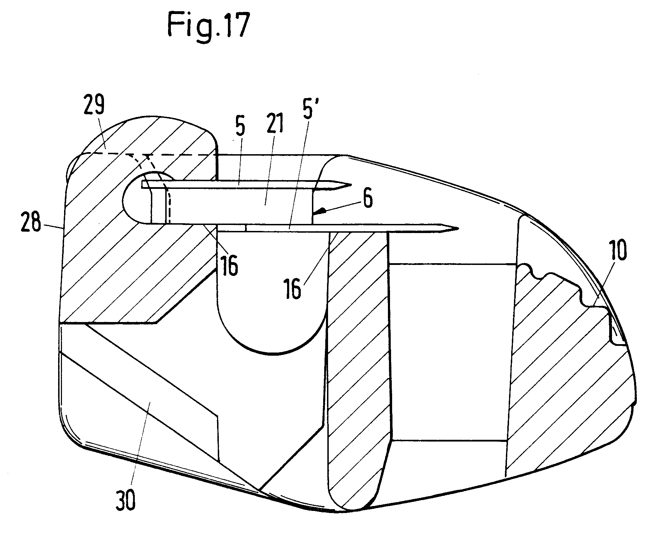

In Fig. 17 schließlich ist eine alternative Ausführungsform der Befestigung des Klingenblocks 6 innerhalb des Kunststoffgehäuses 2 dargestellt, und zwar in einer Schnittdarstellung ähnlich der in Fig. 16. Dabei kann auch diese Ausführungsform Ausnehmungen 26 im Bereich der Seitenwände 15 des Kunststoffgehäuses 2 aufweisen, in denen der Klingenblock 6 nach dem Einsetzen positioniert ist.

Auch bei dieser Ausführungsform ist an der hinteren Längsseite 28 des Kunststoffgehäuses 2 eine im wesentlichen senkrecht nach oben sich erstreckende Leiste 29 angeformt. Anders als bei der ersten Befestigungsart, wo die Seitenwände 15 im Bereich der Ausnehmungen 26 über die Enden des Klingenblocks 6 nach innen umgebogen sind, ist hier die zunächst senkrecht nach oben sich erstreckende Leiste 29 derart nach vorne umgebogen, daß sie auf dem Klingenblock 6 zu liegen kommt, so daß dieser innerhalb des Kunststoffgehäuses 2 fixiert ist. Das Umbiegen der Leiste 29 kann entweder über die gesamte Länge erfolgen oder aber auch nur in Teilbereichen, beispielsweise an zwei Stellen. Dieses Nachvornebiegen der Leiste 29 genügt, um den Klingenblock 6 innerhalb des Kunststoffgehäuses 2 festzulegen. Die seitlichen Ausnehmungen 26 im Bereich der Seitenwände 15 dienen lediglich dazu, den Klingenblock 6 in die vorgegebene Rasiergeometrie zu bringen.

Bei dieser zweiten Ausführungsform einer Rasierklingeneinheit 1 weist der Klingenblock 6 eine etwas andere Gestalt auf als der Klingenblock 6 der ersten Ausführungsform. Nichtsdestoweniger ist es aber auch möglich, den Klingenblock 6 dieser zweiten Ausführungsform entsprechend dem Klingenblock 6 der ersten Ausführungsform auszubilden, also mit einem L-förmigen Querschnittsprofil, dessen einer Schenkel den Abstandhalter definiert, während der andere Schenkel von einem dazu korrespondierenden Längsschlitz im Unterteil des Kunststoffgehäuses 2 aufgenommen ist. Der einzige Unterschied zur ersten Ausführungsform besteht somit lediglich darin, daß der Klingenblock 6 nicht mittels einer Fixierleiste 4 im Kunststoffgehäuse 2, sondern durch plastische Verformung des Kunststoffgehäuses 2 fixiert wird.

EP 0 413 143 B1

<u>B e z u g s z e i c h e n l i s t e</u>

| 1 | Rasierklingeneinheit | 25 | Flügel |
| 2 | Kunststoffgehäuse | 26 | Ausnehmung |
| 3 | Unterteil | 27 | Rippe |
| 4 | Fixierleiste | 28 | Längsseite |
| 5 | Rasierklinge | 29 | Leiste |
| 5' | Rasierklinge | 30 | Verriegelungsmechanismus |
| 6 | Klingenblock | 31 | Vorderseite |
| 7 | Mittelsteg | | |
| 8 | Auflagesteg | | |
| 9 | Schneidkante | | |
| 9' | Schneidkante | | |
| 10 | Führungsleiste | | |
| 11 | Aussparung | | |
| 12 | Durchbrechung | | |
| 13 | Rückwand | | |
| 14 | Längsschlitz | | |
| 15 | Seitenwand | | |
| 16 | Klingenplattform | | |
| 17 | Leiste | | |
| 17' | Leistenstück | | |
| 18 | Steg | | |
| 19 | Schenkel | | |
| 19a | Schenkel | | |
| 19' | Schenkel | | |
| 19a' | Schenkel | | |
| 20 | Öffnung | | |
| 21 | Abstandhalter | | |
| 22 | Abdeckkappe | | |
| 23 | rückseitige Wand | | |
| 24 | Durchbrechung | | |

**Patentansprüche**

1. Am vorderen Ende eines Handgriffs angeordneter Rasierapparatekopf, insbesondere Rasierklingeneinheit (1) eines Naßrasierapparates,
mit einem, an einer Vorderkante eine vordere Führungsleiste (10) sowie eine Klingenplattform (16) aufweisenden Kunststoffgehäuse (2)

sowie mit einem Klingenblock (6), bei dem an einem Abstandhalter (21) eine Einfach- oder Doppelrasierklinge (5,5') unlösbar befestigt ist,

wobei der Klingenblock (6) im wesentlichen von der Vorderkante gesehen von oben in das Kunststoffgehäuse (2) auf die Klingenplattform (16) einsetzbar und nach dem Einsetzen im Kunststoffgehäuse (2) fixierbar ist,

**dadurch gekennzeichnet,**

daß für den Klingenblock (6) eine Leiste (17) mit einem im wesentlichen L-förmigen Querschnittsprofil vorgesehen ist, deren eine Schenkel (19a) den Abstandhalter (21) definiert und deren andere Schenkel (19) von einem dazu korrespondierenden Längsschlitz (14) im Unterteil (3) des Kunststoffgehäuses (2) aufgenommen ist.

2. Rasierapparatekopf nach Anspruch 1, dadurch gekennzeichnet, daß die beiden Schenkel (19,19a) der L-förmigen Leiste (17) senkrecht zueinander stehen.

3. Rasierapparatekopf nach Anspruch 1 oder 2, dadurch gekennzeichnet, daß die Leiste (17) durch kurze Leistenstücke (17') gebildet ist, welche durch Stege (18) im Bereich derjenigen Schenkel (19') starr miteinander verbunden sind, die vom Längsschlitz (14) im Unterteil (3) der Kunststoffgehäuses (2) aufgenommen sind, und daß in senkrechter Richtung zu der (den) Schneidkante(n) (9,9') der Rasierklinge(n) (5,5') fluchtend mit den zwischen den Leistenstücken (17') freigelassenen Öffnungen (20) die Rückseite des Kunststoffgehäuses (2) korrespondierend offen ist.

4. Rasierapparatekopf nach Anspruch 3, dadurch gekennzeichnet, daß oberhalb der Stege (18) im Bereich derjenigen Schenkel (19'), die durch die Stege (18) miteinander verbunden sind, Öffnungen (20) freigelassen sind.

5. Rasierapparatekopf nach Anspruch 3 oder 4, dadurch gekennzeichnet, daß die Leistenstücke (17') im wesentlichen im mittleren Bereich der Schenkel (19') miteinander verbunden sind, wobei das Unterteil (3) des Kunststoffgehäuses (2) Aussparungen zur Aufnahme der freien Enden der durch die Stege (18) miteinander verbundenen Schenkel (19') aufweist.

6. Rasierapparatekopf nach einem der Ansprüche 1 bis 5, dadurch gekennzeichnet, daß die Klingenplattform (16) durch senkrecht zu der (den) Schneidkante(n) (9) der Rasierklinge(n) (5,5') sich erstreckende Auflagestege (8) gebildet ist.

7. Rasierapparatekopf nach einem der Ansprüche 3 bis 5 sowie nach Anspruch 6, dadurch gekennzeichnet, daß die Auflagestege (8) vor den Leistenstücken(17') liegen.

8. Rasierapparatekopf nach Anspruch 7, dadurch gekennzeichnet, daß das Unterteil (3) des Kunststoffgehäuses (2) zwischen den Auflagestegen (8) Durchbrechungen (12) aufweist.

9. Rasierepparatekopf nach Anspruch 8, dadurch gekennzeichnet, daß die Führungsleiste (10) ausgehend von deren Oberseite rückseitig nach hinten hin abgeschrägt ist.

10. Rasierapparatekopf nach einem der Ansprüche 7 bis 9, dadurch gekennzeichnet, daß die Auflagestege (8) im Bereich hinter der Führungsleiste (10) oberseitig Aussparungen (11) aufweisen.

11. Rasierapparatekopf nach einem der Ansprüche 1 bis 10, dadurch gekennzeichnet, daß die Führungsleiste (10) einstückig mit dem Unterteil (3) des Kunststoffgehäuses (2) ausgebildet ist.

12. Rasierapparatekopf nach einem der Ansprüche 1 bis 11, dadurch gekennzeichnet, daß der Klingenblock (6) in ein die Klingenplattform (16) aufweisendes Unterteil (3) des Kunststoffgehäuses (2) auf die Klingenplattform (16) einsetzbar ist und daß auf das Unterteil (3) des Kunststoffgehäuses (2) unter Zwischenanordnung und Fixierung des Klingenblocks (6) eine eine Abdeckkappe (22) definierende Fixierleiste (4) aufsetzbar und mit dem Unterteil des Kunststoffgehäuses (2) unlösbar verbindbar ist.

13. Rasierapparatekopf nach Anspruch 12, dadurch gekennzeichnet, daß die Fixierleiste (4) seitliche Flügel (25) aufweist, mittels denen die Fixierleiste (4) auf einer Seitenwand (15) des Unterteils (3) des Kunststoffgehäuses (2) befestigt ist.

14. Rasierapparatekopf nach Anspruch 12 oder 13, dadurch gekennzeichnet, daß die Fixierleiste (4) eine rückseitige Wand (23) aufweist, mittels der die Fixierleiste (4) auf einer Rückwand (13) des Unterteils (3) des Kunststoffgehäuses (2) befestigt ist.

15. Rasierapparatekopf nach einem der Ansprüche 12 bis 14, dadurch gekennzeichnet, daß das Unterteil (3) des Kunststoffgehäuses (2) mit der Fixierleiste (4) verklebt, verschweißt, insbesondere ultraschallverschweißt, oder ineinandergesteckt ist.

16. Rasierapparatekopf nach einem der Ansprüche 12 bis 15, dadurch gekennzeichnet, daß die die Abdeckkappe (22) definierende Fixierleiste (4) mit einer reibungsmindernden Beschichtung, insbesondere aus Fotolack oder einem Polymer beschichtet ist.

17. Rasierapparatekopf nach Anspruch 3 sowie nach den Ansprüchen 12 bis 16, dadurch gekennzeichnet, daß die Fixierleiste (4) eine rückseitige Wand (23) aufweist, die zu den in der Leiste (17) ausgebildeten Öffnungen (20) fluchtende Durchbrechungen (24) aufweist.

18. Rasierapparatekopf nach einem der Ansprüche 1 bis 11, dadurch gekennzeichnet, daß das Kunststoffgehäuse (2) nach dem Einsetzen des Klingenblocks (6) derart plastisch verformbar ist, daß zwischen den verformten Bereich und der Klingenplattform (16) der Klingenblock (6) festgelegt ist.

19. Rasierapparatekopf nach Anspruch 18, dadurch gekennzeichnet, daß das Kunststoffgehäuse (2) kaltverformbar ist.

20. Rasierapparatekopf nach Anspruch 18 oder 19, dadurch gekennzeichnet, daß der Abstandhalter (21) über die Enden der Rasierklinge(n) (5,5') übersteht und der Klingenblock (6) im Bereich dieser freien Enden des Abstandhalters (21) festgelegt ist.

21. Rasierapparatekopf nach einem der Ansprüche 18 bis 20, dadurch gekennzeichnet, daß in den beiden Seitenwänden (15) des Kunststoffgehäuses (2) jeweils eine nach oben hin offene Ausnehmung (26) vorgesehen ist, in die die Enden des Klingenblocks (6) von oben einsetzbar sind, und daß im Bereich dieser Ausnehmungen (26) die Seitenwände (15) über die Enden des Klingenblocks (6) zu deren Festlegung innerhalb des Kunststoffgehäuses (2) nach innen umgebogen sind.

22. Rasierapparatekopf nach Anspruch 21, dadurch gekennzeichnet, daß die Ausnehmungen (26) trichterförmig ausgebildet sind.

23. Rasierapparatekopf nach Anspruch 21 oder 22, dadurch gekennzeichnet, daß an der Rückseite der Ausnehmungen (26) jeweils eine in Einsetzrichtung sich erstreckende sowie die Ausnehmung (26) in Einsetzrichtung verjüngende Rippe (27) angeformt ist.

24. Rasierapparatekopf nach einem der Ansprüche 18 bis 23, dadurch gekennzeichnet, daß an der hinteren Längsseite (28) des Kunststoffgehäuses (2) eine im wesentlichen senkrecht nach oben sich erstreckende Leiste (29) angeformt ist.

25. Rasierapparatekopf nach Anspruch 18 oder 19, dadurch gekennzeichnet, daß an der hinteren Längsseite (28) des Kunststoffgehäuses (2) eine im wesentlichen senkrecht nach oben sich erstreckende Leiste (29) angeformt ist, die zur Festlegung des Klingenblocks (6) innerhalb des Kunststoffgehäuses (2) entweder über die gesamte Länge oder in Teilbereichen nach vorne umgebogen ist.

26. Rasierapparatekopf nach einem der Ansprüche 1 bis 25, dadurch gekennzeichnet, daß die Rasierklinge(n) (5,5') vorzugsweise über die gesamte Kontaktfläche auf dem Abstandhalter (21) aufgeschweißt oder aufgeklebt ist (sind).

## Claims

1. A razor head to be arranged at the front end of a razor handle, especially a razor blade unit of a wet safety razor,
with a plastic housing 2 comprising a blade platform 16 and a front guardbar 10 arranged at its front side, as well as with a blade block 6 to which a razor blade means in the form of a single or double razor blade is immovably fixed,

**11**

whereby said blade block essentially being placed from above into said plastic housing and onto said blade platform thereof: and following placement is fixable in the plastic housing 2, characterised in that, the blade block 6 is provided with a strip 17 having an essentially L-shaped cross-sectional configuration with one leg 19a defining said spacer 21, and the other leg 19 being received by a corresponding longitudinal slot 14 in a lower portion 3 of said plastic housing 2.

2. A razor head according to claim 1, characterised in that the two legs 19, 19a of said L-shaped strip 17 are disposed at right angles to one another.

3. A razor head according to claim 1 or 2, characterised in that the strip 17 is formed by short strip elements 17' that are fixedly interconnected by pieces 18, to the corresponding leg 19' formed by said strip elements being received in said longitudinal slot 14 of said lower portion 3 of said plastic housing 2; and in which in a direction perpendicular to cutting edge(s) 9, 9' of said razor blade(s) 5, 5', a rear wall of said plastic housing 2 has openings 20 that correspond to openings between said strip elements 17'.

4. A razor head according to claim 3, characterised in that said openings 20 are provided above said pieces 18 in the region of the leg 19', through which the pieces 18 are connected to each other.

5. A razor head according to claim 3 or 4, characterised in that the elements 17' are interconnected essentially in a central portion of the leg 19' whereby the lower portion 3 of said plastic housing 2 being provided with slot means for receiving the free ends which are formed by pieces 18 connecting together the leg 19'.

6. A razor head according to any on of claims 1 to 5, characterised in that the blade platform 16 is formed by support ribs 8 that extend at right angles to the cutting edge(s) 9 of said razor blade(s) 5, 5'.

7. A razor head according to any one of claims 3 to 5a well as claim 6, characterised in that the support ribs 8 are disposed in front of the strip elements 17'.

8. A razor head according to claim 7, characterised in that the lower portion 3 of said plastic housing 2 is provided with openings 12 that are disposed between said support ribs 8.

9. A razor head according to claim 8, in which said guardbar 10, starting from an upper side thereof, is angled downwardly and toward the rear.

10. A razor head according to any one of claims 7 to 9, in which an upper side of each of said support ribs 8, in the region behind said guardbar 10, is provided with a recesses 11.

11. A razor head according to any one of claims 1 to 10, characterised in that the guardbar 10 is integral with said lower portion 3 of said plastic housing 2.

12. A razor head according to any one of claims 1 to 11, characterised in that the blade block 6 is insertable into said lower portion 3 of said plastic housing 2, which lower portion 3 is provided with said blade platform 16; and in which said means for arranging between and fixing said blade block 6 in the lower portion 3 of said plastic housing 2 comprises a fixation strip 4 that defines a protective cap 22, with said fixation strip 4 being fixedly connectable to said lower portion of said plastic housing 2.

13. A razor head according to claim 12, characterised in that the fixation strip 4 is provided with side wings 25 via which said fixation strip 4 is secured to side walls 15 of said lower portion 3 of said plastic housing 2.

14. A razor head according to claim 12 or 13, characterised in that the fixation strip 4 has a rear wall 23 via which said fixation strip 4 is secured to a rear wall 13 of said lower portion 3 of said plastic housing 2.

15. A razor head according to any one of claims 12 to 14, characterised in that the fixation strip 4 is secured to said lower portion 3 of said plastic housing 2 by being glued thereto, by being welded, especially ultrasonically welded, thereto, or by inserting the two parts into one another.

16. A razor head according to any one of claims 12 to 15, characterised in that the fixation strip 4, which defines said protective cap 22, is coated with a friction-reducing coating, especially of a photo lacquer or a polymer.

**17.** A razor head according to claim 3 as well as to any one of claims 12 to 16, characterised in that the fixation strip 4 has a rear wall 23 with openings 24 that are aligned with openings 20 provided in the strip 17.

**18.** A razor head according to any one of claims 1 to 11, characterised in that the blade block 6 in said plastic housing 2 comprises plastically deformed portions of said housing, whereby said blade block 6 is fixed in position between said deformed portions and the blade platform 16.

**19.** A razor head according to claim 18, characterised in that the plastic housing 2 is cold deformable.

**20.** A razor head according to claim 18 or 19, characterised in that the spacer 21 has free ends that project beyond said razor blade(s) 5, 5', with said blade block 6 being held in place in the vicinity of said free ends of said spacer 21.

**21.** A razor head according to any one of claims 18 to 20, characterised in that the plastic housing 2 has two side walls 15, each of which is provided with an upwardly open recessed area 26 into which said free ends of said blade block 6 are inserted from above; and that in the region of said recessed areas 26 said side walls 15 are bent inwardly over said free ends to fix said blade block 6 in said plastic housing 2.

**22.** A razor head according to claim 21, characterised in that the recessed areas 26 have a funnel-shaped configuration.

**23.** A razor head according to claim 21 or 22, characterised in that on the rear side of said recessed areas 26 is formed a fin 27 that extends in the direction of insertion and narrows said recessed area in said direction of insertion.

**24.** A razor head according to any one of claims 18 to 23, characterised in that on the rear longitudinal side of said plastic housing 2 is formed a strip that extends essentially vertically upwardly.

**25.** A razor head according to claims 18 or 19, characterised in that on the rear longitudinal side of said plastic housing 2 is formed a strip that extends essentially vertically upwardly, in order to fix the blade block 6 inside the plastic housing 2 either along the whole of its length or in sections which are bent over forwardly.

**26.** A razor head according to any one of claims 1 to 25, characterised in that the razor blades 5, 5' are preferably glued or welded over the whole contact surface to the spacer 21.

**Revendications**

**1.** Tête de rasage disposée à l'extrémité avant d'une poignée, notamment ensemble à lames (1) pour rasoir mécanique, comportant un boîtier en matière plastique (2) muni d'une moulure antérieure de guidage (10) sur son bord avant et d'un appui de lames (16),

ainsi qu'un bloc à lames (6) dans lequel une lame de rasage simple ou double (5,5') est fixée de façon inamovible sur un support d'entretoisement (21),

ce bloc à lames pouvant, en regardant sensiblement depuis le bord avant, être introduit à partir du haut dans le boîtier en matière plastique (2) jusque sur l'appui de lames (16) et être fixé après introduction dans le boîtier en matière plastique (2),

caractérisée en ce qu'une barrette (17) à section transversale essentiellement en forme de L est prévue pour le bloc à lames (6), l'une des branches (19a) de cette barrette constituant le support d'entretoisement (21) et l'autre branche (19) étant disposée dans une fente longitudinale correspondante (14) de la partie inférieure (3) du boîtier en matière plastique (2).

**2.** Tête de rasage selon la revendication 1, caractérisée en ce que les deux branches (19,19a) de la barrette en forme de L (17) sont perpendiculaires l'une à l'autre.

**3.** Tête de rasage selon la revendication 1 ou la revendication 2, caractérisée en ce que la barrette (17) est constituée de courts tronçons de barrette (17') assemblés rigidement entre eux par des entretoises (18) dans la zone des branches (19') disposées dans la fente longitudinale (14) de la partie inférieure (3) du boîtier en matière plastique (2), et en ce que dans la direction perpendiculaire à la ou aux arêtes de coupe (9,9') de la ou des lames de rasage (5,5'), le côté arrière du boîtier en matière plastique (2) est ouvert en face des ouvertures (20) dégagées entre les tronçons de barrette (17').

4. Tête de rasage selon la revendication 3, caractérisée en ce que des ouvertures (20) sont ménagées au-dessus des entretoises (18) dans la zone des branches (19') reliées entre elles par les entretoises (18).

5. Tête de rasage selon la revendication 3 ou la revendication 4, caractérisée en ce que les tronçons de barrette (17') sont assemblés entre eux sensiblement dans la partie médiane des branches (19'), la partie inférieure (3) du boîtier en matière plastique (2) présentant des évidements pour recevoir les extrémités libres des branches (19') reliées entre elles par les entretoises (18).

6. Tête de rasage selon l'une des revendications 1 à 5, caractérisée en ce que l'appui de lames (16) est constitué par des nervures d'appui (8) s'étendant perpendiculairement à la ou aux arêtes de coupe (9) de la ou des lames de rasage (5,5').

7. Tête de rasage selon l'une des revendications 3 à 5 ainsi que selon la revendication 6, caractérisée en ce que les nervures d'appui (8) sont disposées devant les tronçons de barrette (17').

8. Tête de rasage selon la revendication 7 caractérisée en ce que la partie inférieure (3) du boîtier en matière plastique (2) présente des passages (12) entre les nervures d'appui (8).

9. Tête de rasage selon la revendication 8 caractérisée en ce que la moulure de guidage (10) est, sur sa face arrière, constituée en forme de biseau descendant vers l'arrière à partir de sa partie supérieure.

10. Tête de rasage selon l'une des revendications 7 à 9 caractérisée en ce que les nervures d'appui (8) présentent des échancrures supérieures (11) dans la zone située derrière la moulure de guidage (10).

11. Tête de rasage selon l'une des revendications 1 à 10 caractérisée en ce que la moulure de guidage (10) est constituée en une seule pièce avec la partie inférieure (3) du boîtier en matière plastique (2).

12. Tête de rasage selon l'une des revendications 1 à 11 caractérisée en ce que le bloc à lames (6) peut être inséré dans une partie inférieure (3) du boîtier en matière plastique (2) comportant l'appui de lames (16), ce bloc reposant sur l'appui de lames (16), et en ce qu'une moulure de fixation (4) formant un capuchon de recouvrement (22) peut être engagée sur la partie inférieure (3) du boîtier en matière plastique (2) avec interposition et fixation du bloc à lames (6), cette moulure de fixation pouvant être assemblée de façon inamovible avec la partie inférieure du boîtier en matière plastique (2).

13. Tête de rasage selon la revendication 12 caractérisée en ce que la moulure de fixation (4) présente des ailes latérales (25) au moyen desquelles cette moulure de fixation (4) peut être fixée sur une paroi latérale (15) de la partie inférieure (3) du boîtier en matière plastique (2).

14. Tête de rasage selon la revendication 12 ou la revendication 13 caractérisée en ce que la moulure de fixation (4) présente une paroi arrière (23) au moyen de laquelle cette moulure de fixation (4) est fixée sur une paroi arrière (13) de la partie inférieure (3) du boîtier en matière plastique (2).

15. Tête de rasage selon l'un des revendications 12 à 14 caractérisée en ce que la partie inférieure (3) du boîtier en matière plastique (2) est assemblée avec la moulure de fixation (4) par collage, soudage, notamment soudage par ultrasons ou par engagement réciproque.

16. Tête de rasage selon l'une des revendications 12 à 15 caractérisée en ce que la moulure de fixation (4) formant le capuchon de recouvrement (22) est recouverte par un revêtement diminuant le frottement, notamment en laque photosensible ou en un polymère.

17. Tête de rasage selon la revendication 3 ainsi que selon les revendications 12 à 16 caractérisée en ce que la moulure de fixation (4) présente une paroi arrière (23) comportant des passages (24) situés en face des ouvertures (20) formées dans la barrette (17).

18. Tête de rasage selon l'un des revendications 1 à 11 caractérisée en ce qu'après l'introduction du bloc à lames (6), le boîtier en matière plastique (2) peut être déformé plastiquement de façon telle que le bloc à lames (6) soit fixé entre la zone déformée et l'appui de lames (16).

19. Tête de rasage selon la revendication 18 caractérisée en ce que le boîtier en matière plastique (2) est déformable à froid.

20. Tête de rasage selon la revendication 18 ou la revendication 19 caractérisée en ce que le support d'entretoisement (21) est en saillie sur les extrémités de la ou des lames de rasage (5,5') et en ce que le bloc à lames (6) est fixé dans la zone de ces extrémités libres du support d'entretoisement (21).

21. Tête de rasage selon l'un des revendications 18 à 20 caractérisée en ce qu'un évidement (26) ouvert vers le haut est prévu dans chacune des deux parois latérales (15) du boîtier en matière plastique (2), les extrémités du bloc à lames (6) pouvant être introduites par le haut dans ces évidements, et en ce que, dans la zone de ces évidements (26), les parois latérales (15) sont repliées vers l'intérieur sur les extrémités du bloc à lames (6) pour assurer sa fixation à l'intérieur du boîtier en matière plastique (2).

22. Tête de rasage selon la revendication 21 caractérisée en ce que les évidements (26) sont constitués en forme de trémies.

23. Tête de rasage selon la revendication 21 ou la revendication 22 caractérisée en ce qu'une nervure (27) s'étendant dans la direction d'introduction et réduisant l'évidement (26) dans cette direction d'introduction est formée sur la face arrière de chacun des évidements (26).

24. Tête de rasage selon l'une des revendications 18 à 23 caractérisée en ce qu'une moulure (29) s'étendant vers le haut de façon sensiblement verticale est formée sur la face longitudinale arrière (28) du boîtier en matière plastique (2).

25. Tête de rasage selon la revendication 18 ou la revendication 19 caractérisée en ce qu'une moulure (29) s'étendant vers le haut de façon sensiblement verticale est formée sur la face longitudinale arrière du boîtier en matière plastique (2), cette moulure étant, pour assurer la fixation du bloc à lames (6) à l'intérieur du boîtier en matière plastique (2), repliée vers l'avant soit sur toute sa longueur, soit dans des zones partielles.

26. Tête de rasage selon l'une des revendications 1 à 25 caractérisée en ce que la ou les lames de rasage (5,5') est ou sont soudée(s) ou collée(s), de préférence sur toute sa ou leur surface de contact avec le support d'entretoisement (21).

Fig.1

Fig.2

Fig.3

EP 0 413 143 B1

Fig.4

Fig.5

Fig.6

Fig.7

EP 0 413 143 B1

Fig.8

Fig.9

Fig.10

Fig.11

Fig.12

Fig.13

EP 0 413 143 B1

## Fig.14

# Fig.15

## Fig.16

Fig.17